# EUROPEAN PATENT APPLICATION

(11) **EP 4 167 171 A1**
(43) Date of publication of application: **19.04.2023**
(21) Application number: 21821794.1
(22) Date of filing: 04.06.2021
(51) Int. Cl.: G06Q 30/08, G06Q 30/06, G06Q 30/02

(54) **PERSONAL DATA MEDIATION SYSTEM**

(30) Priority: 11.06.2020 KR 20200070617
(71) Applicant: Nam, Ki-Won, Seoul 06159 (KR)
(72) Inventor: PARK, Gil-Ju, Daejeon 34022 (KR); NAM, Ki-won, Seoul 06159 (KR)
(74) Representative: Botti, Mario
(86) International application number: PCT/KR2021/007038
(87) International publication number: WO 2021/251697

(57) **Abstract**

The present invention relates to a system for mediating personal data of a user, and it is an object of the present invention to provide the personal data mediation system which allows information to be more reasonably mediated.

## Description

### [Technical Field]

The present invention relates to a system for mediating personal data of a user ("personal data mediation system"), and more particularly, to a personal data mediation system configured to: automatically transmit information on a beneficiary of information under a specific condition to the user or transmit the information on the beneficiary of information to the user terminal after confirming the beneficiary of information by the user; classify consumption credit rating information for each user established on the basis of a purchase history by category; register the purchase plan information of the user by category; and mediate so that the beneficiary of information effectively extracts a user who wants to transmit the information, thereby allowing the information to be more reasonably mediated even when the user provides his or her information according to the user's needs, or the user accesses the information on the beneficiary of information.

### [Background Art]

As well known in the art, in accordance with recent development of information communication technology, a technology for information service that provides information on various fields by wide area data communication network in real time to multiple subscribers through at least one host server has been actively developed.

When performing membership registration to an online service, a user agrees to provide his or her personal information to a third party. In this case, conditions for signing up as a member are specified in membership rules, and if the user agrees to provide personal information, an online service provider will freely provide information related to the user, such as personal information of the user or information on consumption history to affiliates or related companies without additional permission from the user.

Users who have agreed to provide personal information in this way frequently receive spam text messages or spam phone calls from companies they do not know. Therefore, there is also a problem that it is necessary to strengthen the person's right to decide on the provision of personal information.

### [Summary of Invention]

### [Problems to be Solved by Invention]

In consideration of the above-mentioned circumstances, it is an object of the present invention to provide a personal data mediation system configured to: automatically transmit information on a beneficiary of information under a specific condition to the user or transmit the information on the beneficiary of information to the user terminal after confirming the beneficiary of information by the user; classify consumption credit rating information for each user established on the basis of a purchase history by category; register the purchase plan information of the user by category; and mediate so that the beneficiary of information effectively extracts a user who wants to transmit the information, thereby allowing the information to be more reasonably mediated even when the user provides his or her information according to the user's needs, or the user accesses the information on the beneficiary of information.

### [Means for Solving Problems]

To achieve the above objects, according to an aspect of the present invention, there is provided a system for mediating personal data of a user including: a user terminal 2 configured to authorize automatic transmission of personal information to a beneficiary of information under specific conditions, or determine whether to transmit personal information after confirming other beneficiaries of information, and display information on the beneficiaries of information on a screen thereof; an information-beneficiary terminal 8 configured to set a user who has registered purchase plan information on a specific category or a target user to whom information desired by the beneficiary of information is transmitted, and transmit a bidding signal for each user to a private data information mediation server; and the private data information mediation server 10 configured to: automatically transmit information on a beneficiary of information under a specific condition to the user or transmit the information on the beneficiary of information to the user terminal after confirming the beneficiary of information by the user; classify consumption credit rating information for each user established on the basis of a purchase history by category, register the purchase plan information of the user by category; and perform an auction of the beneficiaries of information for each user or a user group.

Preferably, the information-beneficiary terminal 8 bids payment costs for provision of personal data for each user or user group to the private data information mediation server 10, and receives the personal data for the user or user group when the bid is successful.

Preferably, the private data information mediation server 10 includes an information-on-beneficiary-of-information standby pool (POOL) 16 in which the information on the beneficiaries of information is classified and registered by category so as to allow the user to access.

Preferably, when a beneficiary of information who requests personal information of a specific user is registered as a user's automatic transmission authorized target, the private data information mediation server 10 immediately transmits the personal information of the user to the beneficiary of information without request for approval transmission of personal information to the user terminal 2.

Preferably, if a beneficiary of information who requests personal information for a specific user is not a user's automatic transmission authorized target, but a user's manual approval is set in the private data information mediation server 10, the private data information mediation server 10 transmits information on the beneficiary of information to the user terminal 2 by a manual approval signal to request to perform the manual approval.

Preferably, the beneficiary of information set by the user's manual approval is a beneficiary of information related to a category in which the user has registered a purchase plan, or a beneficiary of information related to a category of interest to the user.

Preferably, the private data information mediation server 10 includes a private data classification processing unit 26 configured to classify and process information on a purchase history by category and a purchase fulfillment rate by category for each user.

Preferably, the private data information mediation server 10 includes a consumption credit rating calculation unit 30 configured to calculate a consumption credit rating by category, on which a purchase fulfillment rate, a purchase amount size, a purchase cycle, a return rate, a review writing frequency, and a repurchase rate are reflected.

Preferably, the private data information mediation server 10 includes a target selection processing unit 32 configured to allow the beneficiary of information to select users with purchase plans, users who meet personal classification criteria conditions including an age or a gender, or users within a specific purchase fulfillment rate range among users with no purchase plan.

Preferably, the private data information mediation server 10 includes: a private data registration unit 24 configured to register personal information, purchase-related information and a consumption credit rating of the user; a standby pool information management unit 28 configured to manage information in a personal information standby pool and an information-on-beneficiary-of-information standby pool by category by registering, deleting and updating the same; and a purchase plan information management unit 34 configured to register and manage future purchase plan information of the user.

Preferably, the private data information mediation server 10 includes: an information management authorization registration unit 36 configured to authorize and register information management for personal information transmission; an authorization information processing unit 38 configured to authorize transmission of personal information for each user by analyzing user conditions for the beneficiaries of information; and an approval request unit 40 configured to request approval for information transmission of the beneficiary of information to the user if the beneficiary of information is not an authorized target.

Preferably, the private data information mediation server 10 includes: an automatic information matching unit 42 configured to analyze information between users respectively included in a personal information standby pool and an information-on-beneficiary-of-information standby pool and the beneficiaries of information, and pre-registered condition information, thus to automatically match the information; an auction processing unit 44 configured to process a bid and a successful bid for the beneficiaries of information on the personal information of each related user by each category; and a reward management unit 46 configured to manage rewards for each user received in return for accessing information provided by the beneficiary of information.

Preferably, the private data information mediation server 10 provides relatively larger rewards than normal users, as the amount size of the product planned to be purchased for each user is increased, and the user's consumption credit rating or purchase fulfillment rate is increased.

Preferably, the private data information mediation server 10 stores some information of personal data for each user, and the remaining information of personal data is distributed and stored in the user terminal 2, and the private data information mediation server 10 may transmit the information to the information-beneficiary terminal through API communication.

Preferably, according to user's setting, even if information on a beneficiary of information belonging to a category unrelated to the purchase plan or pre-registered category, the private data information mediation server 10 transmits information exceeding a predetermined reward to the user terminal 2.

Preferably, the private data information mediation server 10 partially exposes information such as conditions or reward information from an information-on-beneficiary-of-information standby pool (POOL) 16 and a personal information standby pool (POOL) 14 in a thumbnail manner to freely access the information of the other party, so that the user can select whether or not to access specific conditional information.

### [Advantageous Effects]

The personal data mediation system according to the present invention has advantages that the utilization of the private data system can be activated by: converting the existing system into a self-directed system for personal data while increasing the personal convenience so that users may decide for themselves to provide their private data to which beneficiaries of information; selectively registering private data information on public offices or hospitals, etc. by the user for increasing the convenience, thus to automatically transmit the information; and registering information having a high commercial value such as a purchase plan together, so that processing to help a purchase of the user is also performed together from the beneficiaries of information composed of sellers.

### [Brief Description of Drawings]

FIG. 1 is a block diagram schematically illustrating a configuration of a personal data mediation system according to an embodiment of the present invention.
FIG. 2 is a view illustrating a process of mediating information through the personal data mediation system according to an embodiment of the present invention.
FIG. 3 is a view illustrating an example of classifying and processing private data through the personal data mediation system according to an embodiment of the present invention.
FIG. 4 is a view illustrating a process of calculating a consumption credit rating through the personal data mediation system according to an embodiment of the present invention.
FIG. 5 is a view illustrating an example of setting user extraction target conditions through the personal data mediation system according to an embodiment of the present invention.
FIG. 6 is a flow chart illustrating a process of providing user information through the personal data mediation system according to an embodiment of the present invention.
FIG. 7 is a block diagram illustrating a configuration of a private data information mediation server included in the personal data mediation system according to an embodiment of the present invention.

### [Mode for Carrying out Invention]

Hereinafter, the present invention will be described in detail with reference to the drawings.

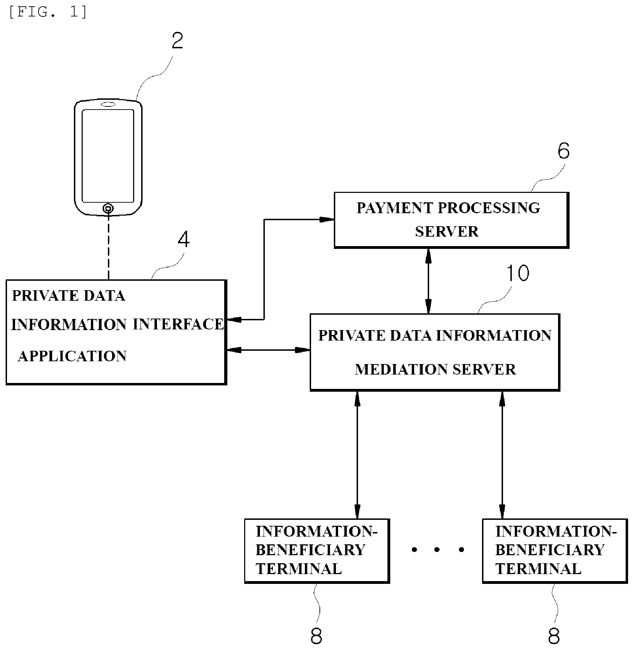

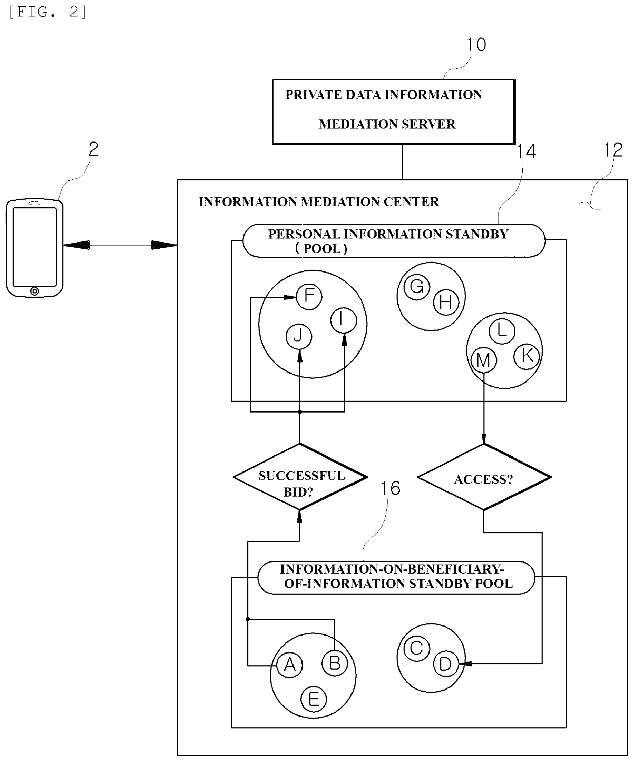

FIG. 1 is a block diagram schematically illustrating the configuration of a personal data mediation system according to an embodiment of the present invention, and FIG. 2 is a view illustrating a process of mediating information through the personal data mediation system according to an embodiment of the present invention.

Referring to FIG. 1 and 2, the personal data mediation system according to an embodiment of the present invention is a system configured to: automatically transmit information on a beneficiary of information under a specific condition to the user or transmit the information on the beneficiary of information to the user terminal after confirming the beneficiary of information by the user; classify consumption credit rating information for each user established on the basis of a purchase history by category; register the purchase plan information of the user by category; and mediate so that the beneficiary of information effectively extracts a user who wants to transmit the information, thereby allowing the information to be more reasonably mediated even when the user provides his or her information according to the user's needs, or the user accesses the information on the beneficiary of information.

More specifically, the personal data mediation system according to an embodiment of the present invention improves the existing system that arbitrarily provides personal information to affiliates, affiliated companies, or related companies for the benefit of the companies, so that users can decide to provide their personal data to whom or any company, and based on the decision, information on who requests to access each individual's data and what to provide in return for such access is provided through mutual mediation. Through this, it is possible to promote mutual benefits between beneficiaries of information and users who provide personal information, so that the system can be activated reasonably.

In particular, in some cases, it is necessary for a user to provide personal data to a public office or hospital through the personal data mediation system according to an embodiment of the present invention. Even in this case, the mediation system is configured so that the user can proactively request transmission of his or her personal data to a specific beneficiary of information.

More specifically, the personal data mediation system according to an embodiment of the present invention includes a user terminal 2 configured to authorize automatic transmission of personal information to a beneficiary of information under specific conditions, or determine whether to transmit personal information after confirming other beneficiaries of information, and display information on the beneficiaries of information on a screen thereof.

At this time, the user terminal 2 is configured to: display the information on the beneficiaries of information provided by the private data information mediation server 10 through a private data information interface application 4, reward information provided by each beneficiary of information in return for accessing, and an approval request signal for accessing the information on the screen; and input a user's selection signal for the same.

In addition, the personal data mediation system according to an embodiment of the present invention includes information-beneficiary terminals 8 owned by beneficiaries of information who wish to access the personal data of the user. The information-beneficiary terminal 8 is configured to set a user who has registered purchase plan information on a specific category or a target user to whom information desired by the beneficiary of information is transmitted, and transmit a bidding signal for each user to the private data information mediation server 10.

In this case, the beneficiary of information may be a public office, a hospital, or a financial institution, etc., which is a target to which the personal data of the user should be submitted according to the user's needs. In the case of the public office, hospital or financial institution, since the user submits his/her personal data according to the user's needs, the user requests the private data information mediation server 10 to transmit his/her personal data without receiving a separate reward.

In addition, when the beneficiary of information is the public office, hospital, or financial institution, the user has the inconvenience of having to approve the information beneficiary's access to his or her personal data each time. In order to eliminate the inconvenience, the user can authorize the private data information mediation server 10 to automatically transmit his or her accessible personal data to the beneficiaries of information belonging to a specific category without an approval signal.

Meanwhile, in this case, the user may specify a specific public office through the user terminal 2, specify the hospital by inputting a specific hospital name, and specify the financial institution. That is, in the case of the financial institution, the user may set to authorize the private data information mediation server 10 to automatically transmit personal data by specifying a financial institution with which he or she transacts and specifically specifying a department such as deposit.

Meanwhile, if the beneficiary of information who requests personal information for a specific user is not a user's automatic transmission authorized target, but a user's manual approval is set in the private data information mediation server 10, the private data information mediation server 10 transmits information on the beneficiary of information to the user terminal 2 by a manual approval signal to request to perform the manual approval.

The beneficiary of information set by the user's manual approval may be a beneficiary of information related to a category in which the user has registered a purchase plan, or a beneficiary of information related to a category of interest to the user.

In one of the beneficiaries of information, there is a case where the user and the beneficiary of information provide the personal information of the user according to mutual needs, and the beneficiary of information accesses the information. For example, this is a case where the user registers the purchase plan for a specific product in a specific category.

In this case, the user may also have a need to purchase a specific product under good conditions. In the case of a seller who is the beneficiary of information, it is necessary to make a sale by presenting a condition that the user is likely to purchase.

At this time, the purchase plan information corresponds to the personal data of the user, and the more specific the information, the greater the value of the personal data. For example, the user may register specific information such as "Refrigerator/Double-door refrigerator/Volume of 000 liters or more/Budget: 4 million won" in the private data information mediation server 10 as purchase plan information.

Then, through the personal data mediation system according to an embodiment of the present invention, the seller who is the beneficiary of information may attempt to access the personal information of the user and provide reward information to the user. Even if the information is necessary for the user, having the user access too much sales information may cause fatigue. Therefore, the personal data mediation system according to an embodiment of the present invention selects a predetermined number of beneficiaries of information through an auction and provides the users with product-related information and benefit information provided by them.

At this time, in the case of a bidding system, although it is a general bidding system, it is preferable to expose the benefits provided to the user to all users before accessing in a thumbnail manner other than the bid as mere advertising costs.

In particular, in the case of a seller who sells a category or product corresponding to the purchase plan of specific user, the seller may participate in the bid while more actively presenting the reward or purchase benefit. The private data information mediation server 10 performs information mediation by providing the users with information on a predetermined number of successful bidders of the beneficiaries of information.

That is, the information-beneficiary terminal 8 bids payment costs for provision of personal data for each user or user group to the private data information mediation server 10, and receives the personal data for the user or user group when the bid is successful.

Meanwhile, there is a case where a user does not require product information but wants to obtain a reward for a predetermined number of upper ranks. In this case, the user may request the private data information mediation server 10 to receive information on the products sold by beneficiaries of information ranked at the top of the bid.

Even if a seller does not register the purchase plan, the seller may perform marketing for product sales while presenting various benefits, and a specific user extraction process will be described in detail below.

Naturally, in this case, the successful bid price will be relatively smaller than the successful bid price for users who have registered the purchase plan.

Meanwhile, the personal data mediation system according to an embodiment of the present invention includes the private data information mediation server 10 configured to: automatically transmit information on a beneficiary of information under a specific condition to the user or transmit the information on the beneficiary of information to the user terminal after confirming the beneficiary of information by the user; classify consumption credit rating information for each user established on the basis of a purchase history by category, register the purchase plan information of the user by category; and perform an auction of the beneficiaries of information for each user or a user group.

Meanwhile, the private data information mediation server 10 separately includes an information-on-beneficiary-of-information standby pool (POOL) 16 in which the information on the beneficiaries of information is classified and registered by category so as to allow the user to access, and a personal information standby pool (POOL) 14 in which the personal data is registered, thereby managing these pools to mediate with each other.

In addition, the private data information mediation server 10 may partially expose information such as conditions or reward information from the information-on-beneficiary-of-information standby pool (POOL) 16 and the personal information standby pool (POOL) 14 in a thumbnail manner to freely access the information of the other party, so that the user can select whether or not to access specific conditional information.

Of course, also in this way, it is preferable that only beneficiaries of information who have primarily passed through the bidding system are included in the information-on-beneficiary-of-information standby pool (POOL) 16.

Meanwhile, the private data information mediation server 10 may receive consumption-related information in conjunction with a payment processing server 6, that is, payment processing servers 6 provided in the financial institution. In this case, the financial institution may be a credit card company.

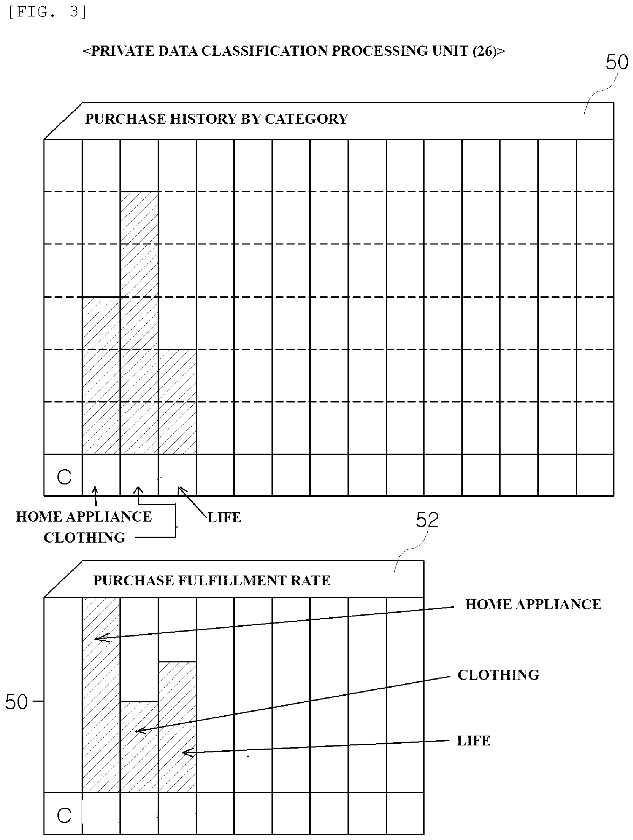

FIG. 3 is a view illustrating a process of classifying and processing the private data through the personal data mediation system according to an embodiment of the present invention.

Referring to FIG. 3, the private data information mediation server 10 includes a private data classification processing unit 26 configured to classify and process information on a purchase history 50 by category and a purchase fulfillment rate 52 by category for each user.

Preferably, the purchase history 50 by category included in the private data classification processing unit 26 is data that visually displays a purchase amount size of each user and a purchase frequency by category, and is used for extraction of target users.

In addition, in the case of the purchase fulfillment rate 52 by category included in the private data classification processing unit 26, when an event is to be held for users who have not registered the purchase plan, as one of conditions for compressing the target user, the purchase fulfillment rate is used. In the case of users with a high purchase fulfillment rate, the seller recognizes them as a very promising user.

At this time, the purchase fulfillment rate is also classified by category. In the case of a specific user, the purchase fulfillment rate for the home appliance category is very high, but the purchase fulfillment rate for the clothing category may be low. In this case, when the seller is a seller of home appliances, it is possible to set the user as a target user for product sales.

Accordingly, the private data information mediation server 10 performs classification processing on the private data, and determines the target users and information mediation through information extraction.

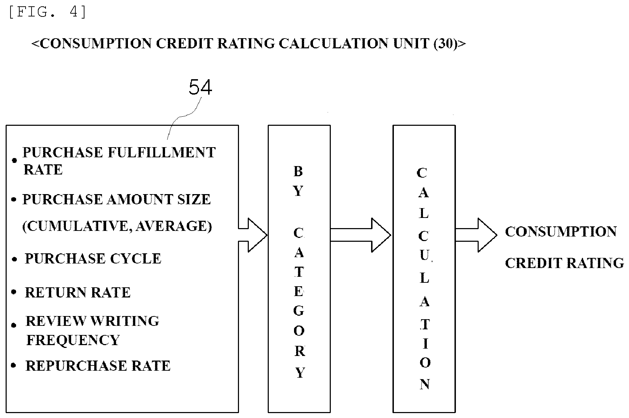

FIG. 4 is a view illustrating a process of calculating a consumption credit rating through the personal data mediation system according to an embodiment of the present invention.

Referring to FIG. 4, the private data information mediation server 10 includes a consumption credit rating calculation unit 30 configured to calculate a consumption credit rating by category, on which a purchase fulfillment rate, a purchase amount size, a purchase cycle, a return rate, a review writing frequency, and a repurchase rate are reflected.

That is, the private data information mediation server 10 generates a consumption credit rating in order to more easily extract the target users. As factors for generating or calculating the consumption credit rating, the "purchase fulfillment rate," "purchase amount size," "purchase cycle," "return rate," "review writing frequency" and "repurchase rate" are proposed.

The "purchase fulfillment rate" and the "purchase amount size" are, most basically, indexes for determining the consumption confidence and economic power, and may be referred to as a basic consumption credit of the user.

The "purchase cycle" is an index representing the user's interest in the product purchase, and in the case of a user with a large "purchase cycle," even if the "purchase size" is small, it may be a credible target user.

In addition, the "return rate" is not only indexed opposite to the "purchase fulfillment rate." That is, even if the "return rate" is high, the "purchase fulfillment rate" may also be high. This is because a user may buy the product again after returning it several times. Therefore, the "return rate" is also managed as a separate numerical value.

The "review writing frequency" may represent loyalty to the product, category, or seller. It may be seen that the higher the frequency of writing reviews, the easier it is to lead to repurchase.

In the case of the "repurchase rate," if a user has the highest loyalty and the high "repurchase rate" while the product is a consumer product, the beneficiaries of information belonging to the same category need to actively promote the sale to the user.

These consumption credit rating-related indices may be calculated by applying a weight as needed. The private data information mediation server 10 will assign a consumption credit rating to each user through calculation.

In addition, at this time, the consumption credit rating is preferably assigned by category. Therefore, the consumption credit rating of a user in the home appliance category is 1st grade, but the consumption credit rating in the clothing category may be 5th grade.

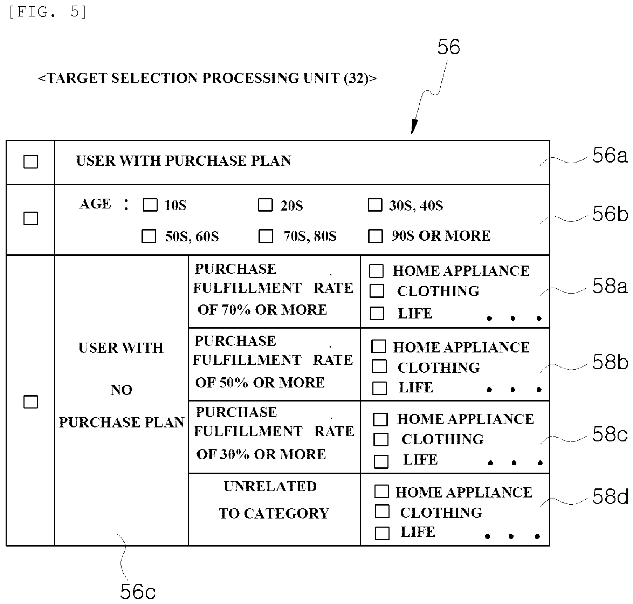

FIG. 5 is a view illustrating an example of setting user extraction target conditions through the personal data mediation system according to an embodiment of the present invention.

Referring to FIG. 5, the beneficiary of information may request a target selection processing unit 32 included in the private data information mediation server 10 for a signal to extract a specific target user. The request is made by selecting information stored in a table 56 for target user extraction requests.

As described above, the table 56 includes: a checkbox 56a configured to extract only users with purchase plans; and a checkbox 56b to specifically select an age and select multiple ages at the same time.

The table 56 also includes a checkbox 56c for selecting users with no purchase plan. The check box 56c may specify the purchase fulfillment rate again, and includes check boxes 58a, 58b, 58c and 58d for selecting specific categories.

In summary, the private data information mediation server 10 includes the target selection processing unit 32 configured to allow the beneficiary of information to select users with purchase plans, users who meet personal classification criteria conditions including an age or a gender, or users within a specific purchase fulfillment rate range among the users with no purchase plan.

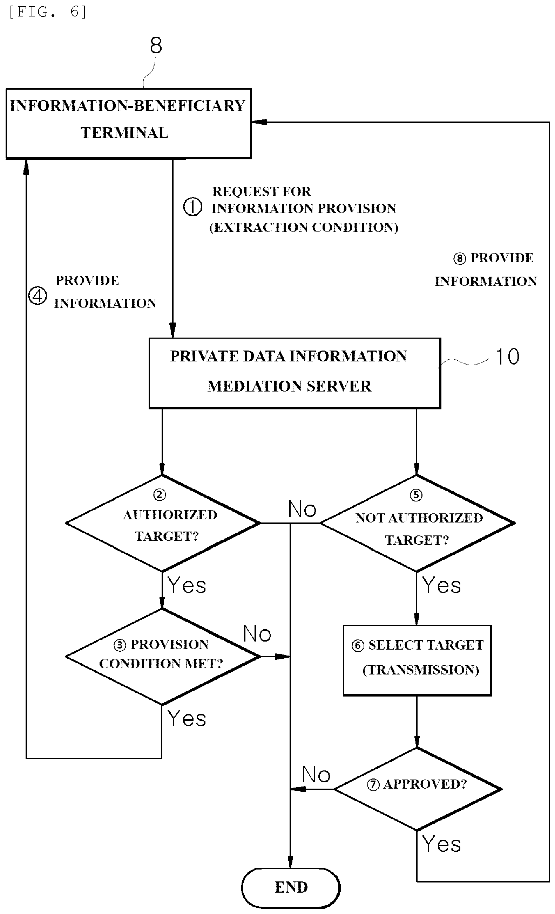

FIG. 6 is a flow chart illustrating a process of providing user information through the personal data mediation system according to an embodiment of the present invention.

First, when schematically reviewing a signal flow of the personal data mediation system according to an embodiment of the present invention, the private data information mediation server 10 receives personal data, that is, private data of the user from the user terminal 2, and registers therein.

Of course, at this time, the private data information mediation server 10 may receive all personal data or receive and register only some personal data, and store the remaining personal data in the user terminal 2. In this state, the private data information may be additionally provided to the private data information mediation server 10 for information mediation through the private data information interface application 4.

In the state where the personal data is registered, the private data information mediation server 10 may be authorized to provide personal data for a specific beneficiary of information by the user's selection.

That is, in the case of targeting the specific beneficiary of information, the user permits and registers the personal data so that the private data information mediation server 10 may transmit them arbitrarily. Through this, the private data information mediation server 10 registers authorization information for personal data transmission for each user.

In that state, the beneficiary of information transmits an information provision request signal to the private data information mediation server 10 through the information-beneficiary terminal 8, and registers user extraction conditions.

Then, the private data information mediation server 10 determines whether the target user designated by the beneficiary of information is present, or authorization information to transmit the personal data for the beneficiary of information is present in the registration information of the target user by search.

If the beneficiary of information for the user is the authorized target, it is determined whether the user meets the provision condition, and then if the condition is met, the private data information mediation server 10 transmits the personal data of the user to the beneficiary of information.

On the other hand, if the beneficiary of information is not an authorized target, the information on the beneficiary of information is provided to the user terminal 2. Specifically, if the beneficiary of information is not the authorized target, only when a bid is made for a specific category for each user corresponding to each extraction condition and the bid is successful, thumbnail information on the beneficiary of information may be provided to the user.

The thumbnail information is simply summarized information on the beneficiaries of information or summarized product information provided by the beneficiaries of information. After checking the thumbnail information, the user may approve whether to provide his or her personal data to the beneficiary of information. If the information is transmitted from the beneficiary of information after approval, the private data information mediation server 10 accumulates rewards according to the data accessed by the user when accessing the information.

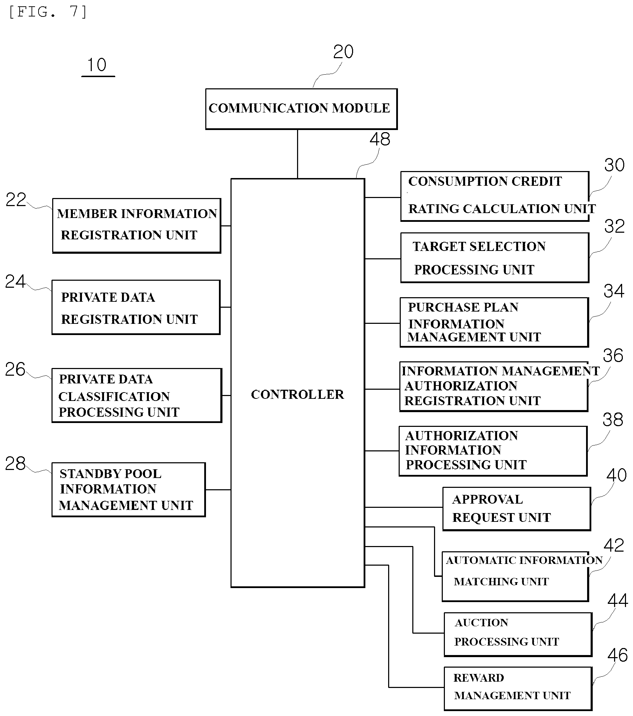

FIG. 7 is a block diagram illustrating a configuration of a private data information mediation server included in the personal data mediation system according to an embodiment of the present invention.

Referring to FIG. 7, the private data information mediation server 10 included in the personal data mediation system according to an embodiment of the present invention includes a member information registration unit 22 configured to register personal information on beneficiaries of information. Further, the private data information mediation server 10 includes: a private data registration unit 24 configured to register personal information, purchase-related information and a consumption credit rating of the user; a standby pool information management unit 28 configured to manage information in the personal information standby pool and the information-on-beneficiary-of-information standby pool by category by registering, deleting and updating the same; and a purchase plan information management unit 34 configured to register and manage future purchase plan information of the user.

In addition, the private data information mediation server 10 includes: an information management authorization registration unit 36 configured to authorize and register information management for personal information transmission; an authorization information processing unit 38 configured to authorize transmission of personal information for each user by analyzing user conditions for the beneficiaries of information; and an approval request unit 40 configured to request approval for information transmission of the beneficiary of information to the user if the beneficiary of information is not an authorized target.

In addition, the private data information mediation server 10 includes: an automatic information matching unit 42 configured to analyze information between users respectively included in the personal information standby pool and the information-on-beneficiary-of-information standby pool, and the beneficiaries of information, and pre-registered condition information, thus to automatically match the information; an auction processing unit 44 configured to process a bid and a successful bid for the beneficiaries of information on the personal information of each related user by each category; and a reward management unit 46 configured to manage rewards for each user received in return for accessing information provided by the beneficiary of information.

At this time, the private data information mediation server 10 provides relatively larger rewards than normal users, as the amount size of the product planned to be purchased for each user is increased, and the user's consumption credit rating or purchase fulfillment rate is increased.

In addition, the private data information mediation server 10 stores some information of personal data for each user, and the remaining information of personal data is distributed and stored in the user terminal 2, and the private data information mediation server 10 may transmit the information to the information-beneficiary terminal through API communication.

In this case, when requesting data stored in the user terminal 2, the requested data may be transmitted after user approval.

Meanwhile, according to user's setting, even if information on a beneficiary of information belonging to a category unrelated to the purchase plan or pre-registered category, the private data information mediation server 10 may transmit information exceeding a predetermined reward to the user terminal 2. It is preferable that the reward criteria are set by the user in advance.

Further, the private data information mediation server includes a communication module 20 configured to perform communication between the units and a controller 48 configured to control the entire operation of the units. Meanwhile, the personal data mediation system according to an embodiment of the present invention is not limited to above-described embodiments, but may be variously modified without departing from the technical gist of the present invention.

### [Description of Reference Numerals]

- 2:: User terminal
- 4:: Private data information interface application
- 6:: Payment processing server
- 8:: Information-beneficiary terminal
- 10:: Private data information mediation server
- 12:: Information mediation center

## Claims

1. A system for mediating personal data of a user comprising:
a user terminal 2 configured to authorize automatic transmission of personal information to a beneficiary of information under specific conditions, or determine whether to transmit personal information after confirming other beneficiaries of information, and display information on the beneficiaries of information on a screen thereof;
an information-beneficiary terminal 8 configured to set a user who has registered purchase plan information on a specific category or a target user to whom information desired by the beneficiary of information is transmitted, and transmit a bidding signal for each user to a private data information mediation server; and
the private data information mediation server 10 configured to: automatically transmit information on a beneficiary of information under a specific condition to the user or transmit the information on the beneficiary of information to the user terminal after confirming the beneficiary of information by the user; classify consumption credit rating information for each user established on the basis of a purchase history by category, register the purchase plan information of the user by category; and perform an auction of the beneficiaries of information for each user or a user group.

2. The system for mediating personal data of a user according to claim 1, wherein the information-beneficiary terminal 8 bids payment costs for provision of personal data for each user or user group to the private data information mediation server 10, and receives the personal data for the user or user group when the bid is successful.

3. The system for mediating personal data of a user according to claim 1, wherein the private data information mediation server 10 includes an information-on-beneficiary-of-information standby pool (POOL) 16 in which the information on the beneficiaries of information is classified and registered by category so as to allow the user to access.

4. The system for mediating personal data of a user according to claim 1, wherein, when a beneficiary of information who requests personal information of a specific user is registered as a user's automatic transmission authorized target, the private data information mediation server 10 immediately transmits the personal information of the user to the beneficiary of information without request for approval transmission of personal information to the user terminal 2.

5. The system for mediating personal data of a user according to claim 1, wherein, if a beneficiary of information who requests personal information for a specific user is not a user's automatic transmission authorized target, but a user's manual approval is set in the private data information mediation server 10, the private data information mediation server 10 transmits information on the beneficiary of information to the user terminal 2 by a manual approval signal to request to perform the manual approval.

6. The system for mediating personal data of a user according to claim 5, wherein the beneficiary of information set by the user's manual approval is a beneficiary of information related to a category in which the user has registered a purchase plan, or a beneficiary of information related to a category of interest to the user.

7. The system for mediating personal data of a user according to claim 1, wherein the private data information mediation server 10 includes a private data classification processing unit 26 configured to classify and process information on a purchase history by category and a purchase fulfillment rate by category for each user.

8. The system for mediating personal data of a user according to claim 1, wherein the private data information mediation server 10 includes a consumption credit rating calculation unit 30 configured to calculate a consumption credit rating by category, on which a purchase fulfillment rate, a purchase amount size, a purchase cycle, a return rate, a review writing frequency, and a repurchase rate are reflected.

9. The system for mediating personal data of a user according to claim 1, wherein the private data information mediation server 10 includes a target selection processing unit 32 configured to allow the beneficiary of information to select users with purchase plans, users who meet personal classification criteria conditions including an age or a gender, or users within a specific purchase fulfillment rate range among users with no purchase plan.

10. The system for mediating personal data of a user according to claim 1, wherein the private data information mediation server 10 comprises:
a private data registration unit 24 configured to register personal information, purchase-related information and a consumption credit rating of the user;
a standby pool information management unit 28 configured to manage information in a personal information standby pool and an information-on-beneficiary-of-information standby pool by category by registering, deleting and updating the same; and
a purchase plan information management unit 34 configured to register and manage future purchase plan information of the user.

11. The system for mediating personal data of a user according to claim 1, wherein the private data information mediation server 10 comprises:
an information management authorization registration unit 36 configured to authorize and register information management for personal information transmission;
an authorization information processing unit 38 configured to authorize transmission of personal information for each user by analyzing user conditions for the beneficiaries of information; and
an approval request unit 40 configured to request approval for information transmission of the beneficiary of information to the user if the beneficiary of information is not an authorized target.

12. The system for mediating personal data of a user according to claim 1, wherein the private data information mediation server 10 comprises:
an automatic information matching unit 42 configured to analyze information between users respectively included in a personal information standby pool and an information-on-beneficiary-of-information standby pool and the beneficiaries of information, and pre-registered condition information, thus to automatically match the information;
an auction processing unit 44 configured to process a bid and a successful bid for the beneficiaries of information on the personal information of each related user by each category; and
a reward management unit 46 configured to manage rewards for each user received in return for accessing information provided by the beneficiary of information.

13. The system for mediating personal data of a user according to claim 1, wherein the private data information mediation server 10 provides relatively larger rewards than normal users, as the amount size of the product planned to be purchased for each user is increased, and the user's consumption credit rating or purchase fulfillment rate is increased.

14. The system for mediating personal data of a user according to claim 1, wherein the private data information mediation server 10 stores some information of personal data for each user, and the remaining information of personal data is distributed and stored in the user terminal 2, and the private data information mediation server 10 may transmit the information to the information-beneficiary terminal through API communication.

15. The system for mediating personal data of a user according to claim 1, wherein, according to user's setting, even if information on a beneficiary of information belonging to a category unrelated to the purchase plan or pre-registered category, the private data information mediation server 10 transmits information exceeding a predetermined reward to the user terminal 2.

16. The system for mediating personal data of a user according to claim 1, wherein the private data information mediation server 10 partially exposes information such as conditions or reward information from an information-on-beneficiary-of-information standby pool (POOL) 16 and a personal information standby pool (POOL) 14 in a thumbnail manner to freely access the information of the other party, so that the user can select whether or not to access specific conditional information.
